# EUROPÄISCHE PATENTSCHRIFT

(11) **EP 4 291 810 B1**
(45) Veröffentlichungstag und Bekanntmachung des Hinweises auf die Patenterteilung: **02.04.2025**
(21) Anmeldenummer: 22703346.1
(22) Anmeldetag: 01.02.2022
(51) Int. Cl.: F16J 15/34

(54) **VERDICHTERANORDNUNG MIT REDUZIERTEM PROZESSGASVERBRAUCH**
COMPRESSOR ARRANGEMENT WITH REDUCED PROCESS GAS CONSUMPTION
AGENCEMENT DE COMPRESSEUR À CONSOMMATION RÉDUITE DE GAZ DE TRAITEMENT

(30) Priorität: 09.02.2021 DE 102021102998
(43) Veröffentlichungstag der Anmeldung: 20.12.2023
(73) Patentinhaber: EagleBurgmann Germany GmbH & Co. KG, 82515 Wolfratshausen (DE)
(72) Erfinder: WERDECKER, Ferdinand, 82432 Walchensee (DE); SCHMIDT, Glenn, Coldspring,, Texas TX 77331 (US); HELLMIG, Benjamin, 81543 München (DE); FRANK, Maximilian, 81373 München (DE); BAUER, Florian, 83679 Sachsenkam (DE); FESL, Andreas, 83624 Otterfing (DE)
(74) Vertreter: Hoefer & Partner Patentanwälte mbB
(86) Internationale Anmeldenummer: PCT/EP2022/052333
(87) Internationale Veröffentlichungsnummer: WO 2022/171491

(56) Entgegenhaltungen:
- WO-A1-2021/190803
- DE-A1- 102014 226 429
- DE-A1- 102015 226 444
- DE-A1- 102018 208 519
- US-A1- 2018 195 618

## Beschreibung

Die vorliegende Erfindung betrifft eine Verdichteranordnung mit einem Verdichter und vorzugsweise genau einer Gleitringdichtung, welche einen signifikant reduzierten Prozessgasverbrauch aufweist.

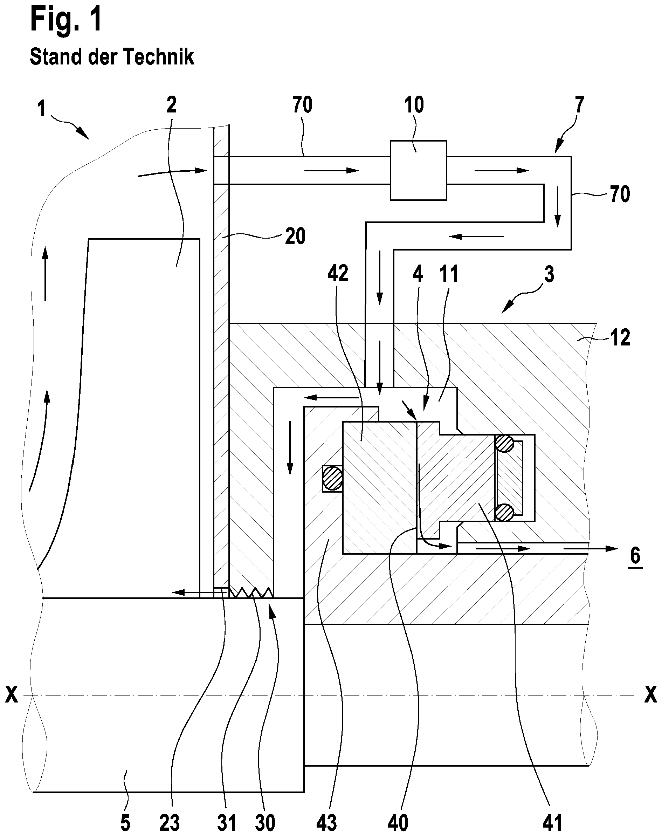

Verdichteranordnungen sind aus dem Stand der Technik in unterschiedlichen Ausgestaltungen bekannt. Üblicherweise umfassen Verdichteranordnungen 1, wie in Fig. 1 gezeigt, einen Verdichter 2 und eine Gleitringdichtungsanordnung 3. Die Gleitringdichtungsanordnung 3 umfasst eine Gleitringdichtung 4 mit einem stationären Gleitring 41 und einem rotierenden Gleitring 42 sowie eine Labyrinthdichtung 30. Wie aus Fig. 1 ersichtlich ist, ist die Labyrinthdichtung 30 in Axialrichtung X-X zwischen dem Verdichter 2 und der Gleitringdichtung 4 angeordnet. Als Sperrgas wird hierbei Prozessgas aus dem Druckbereich des Verdichters 2 entnommen und in eine Sperrgasleitung 70 zugeführt. Das entnommene Prozessgas wird dann in einer Aufbereitungseinheit 10 gefiltert, aufbereitet, geheizt und mittels eines Boosters auf einen Sperrgasdruck gebracht und dann in einen Raum 11 zwischen der Gleitringdichtung 4 und der Labyrinthdichtung 3 zugeführt. Die Labyrinthdichtung 30 weist dabei einen Spalt 31 zu einer Welle 5 auf. Dieser Spalt 31 weist eine Radialbreite von ca. 200 µm auf. Diese Anordnung von Fig. 1 hat sich grundsätzlich bewährt. Ein Problem liegt jedoch im relativ hohen Prozessgasverbrauch, welcher üblicherweise in einem Bereich von 1.000 bis 10.000 Normliter pro Minute liegt. Nach Durchströmen der Labyrinthdichtung 30 wird das Prozessgas wieder in den Verdichterraum des Verdichters zugeführt. Über die Gleitringdichtung 4 ergibt sich, wie in Fig. 1 durch die kleinen Pfeile angedeutet, eine kleine Leckage zur Atmosphäre 6. Durch den hohen Verbrauch des Prozessgases als Sperrgas für die Gleitringdichtungsanordnung 3 ergibt sich jedoch ein relativ großer Wirkungsgradverlust des Verdichters 2 mit entsprechend hohen Betriebskosten des Verdichters und einem relativ großen baulichen Aufwand für die Sperrgasversorgung der Gleitringdichtungsanordnung. Ferner zeigt die DE 10 2018 208 519 A1 eine Verdichteranordnung mit einer Gleitringdichtung, bei der ein mittels Stickstoff erzeugtes Sperrfluid von einer Rückseite des stationären Gleitrings zum Dichtspalt zugeführt wird. Ferner zeigt die DE 10 2014 226429 A1 eine Verdichteranordnung gemäß dem Oberbegriff des Anspruchs 1.

Es ist daher Aufgabe der vorliegenden Erfindung, eine Verdichteranordnung bereitzustellen, welche bei einfachem Aufbau und einfacher, kostengünstiger Herstellbarkeit eine Reduzierung einer abgezweigten Menge an Prozessgas als Sperrfluid für die Gleitringdichtung ermöglicht und damit einen Wirkungsgrad der Verdichteranordnung verbessern kann.

Diese Aufgabe wird durch eine Verdichteranordnung mit den Merkmalen des Anspruchs 1 gelöst. Die Unteransprüche zeigen bevorzugte Weiterbildungen der Erfindung.

Die erfindungsgemäße Verdichteranordnung mit den Merkmalen des Anspruchs 1 weist den Vorteil auf, dass ein Gesamtwirkungsgrad einer Verdichteranordnung deutlich gesteigert werden kann. Weiterhin kann auch eine Menge an Prozessgas, welches als Sperrfluid für eine Gleitringdichtungsanordnung verwendet wird, signifikant reduziert werden. Darüber hinaus kann die Gleitringdichtungsanordnung eine Abdichtung nur mit einer einzigen Dichtung, nämlich einer Gleitringdichtung, ermöglichen. Dies wird erfindungsgemäß dadurch erreicht, dass die Verdichteranordnung einen Verdichter zum Verdichten des Prozessgases von einem Saugbereich zu einem Druckbereich und eine Gleitringdichtungsanordnung aufweist. Die Gleitringdichtungsanordnung ist zur Abdichtung an einer Welle des Verdichters gegenüber einer Atmosphäre eingerichtet. Die Gleitringdichtungsanordnung umfasst eine Gleitringdichtung mit einem eine erste Gleitfläche aufweisenden stationären Gleitring und einem eine zweite Gleitfläche aufweisenden rotierenden Gleitring. Die beiden Gleitringe definieren zwischen ihren Gleitflächen einen Dichtspalt. Ferner ist eine Sperrfluidversorgung mit einer Sperrfluidleitung vorgesehen, welche von dem Druckbereich des Verdichters zur Gleitringdichtung führt und durch welche Prozessgas als Sperrfluid vom Hauptstrom des Verdichters abgezweigt wird. Der stationäre Gleitring weist eine Durchgangsöffnung auf, welche von einer Rückseite des stationären Gleitrings zu einer Mündung an der ersten Gleitfläche des stationären Gleitrings verläuft, um Prozessgas aus der Sperrfluidleitung durch den stationären Gleitring zum Dichtspalt zuzuführen.

Da das als Sperrfluid verwendete Sperrgas durch den stationären Gleitring direkt zum Dichtspalt geführt wird und somit an der Gleitfläche des stationären Gleitrings austritt, ergeben sich im Betrieb zwei Dichtbereiche am Dichtspalt, nämlich einmal radial oberhalb der Mündung der Durchgangsöffnung und radial innerhalb der Mündung der Durchgangsöffnung. Dabei übernimmt der Dichtbereich unterhalb der Mündung die Abdichtung zur Atmosphärenseite und der Dichtbereich oberhalb der Mündung der Durchgangsöffnung die Abdichtung zum Verdichter. Vorzugsweise ist wenigstens einer der Dichtbereiche, insbesondere der zum Verdichter abdichtende Dichtbereich, nutfrei, d.h., ohne Nuten oder andere Vertiefungen. Somit kann auf die Labyrinthdichtung im Stand der Technik, welche im Stand der Technik die zweite Dichtung bildet, verzichtet werden. Da der Dichtspalt zwischen den Gleitflächen der Gleitringe nur wenige µm, insbesondere ≤ 10 µm, beträgt, kann eine Menge an notwendigem Sperrfluid im Betrieb der Gleitringdichtungsanordnung signifikant reduziert werden. Bei der bisherigen Lösung im Stand der Technik beträgt der Dichtspalt an der Labyrinthdichtung, welche die zweite Dichtung der Gleitringdichtungsanordnung des Standes der Technik bildet, ca. 200 µm. Somit kann der Spalt im Vergleich mit dem Stand der Technik bei der vorliegenden Erfindung um den Faktor 20 oder größer reduziert werden. Dadurch ergeben sich signifikant reduzierte Verbrauchsmengen an Sperrfluid um den Faktor 20 oder größer. Aufgrund der reduzierten Verbrauchsmengen an Sperrfluid können auch Zusatzeinrichtungen der Sperrfluidversorgung deutlich kleiner als im Stand der Technik ausgelegt werden. Dies betrifft insbesondere Aufbereitungseinheiten, welche beispielsweise einen Filter, eine Heizung und/oder eine Kühlung und einen Booster aufweisen.

Ein weiterer großer Vorteil der Erfindung liegt darin, dass eine axiale Baulänge der Gleitringdichtungsanordnung durch Wegfall der Labyrinthdichtung reduziert werden kann. Dadurch ergibt sich insgesamt eine reduzierte Baulänge der Verdichteranordnung, was zu hohen Kosteneinsparpotentialen für die Hersteller von Verdichtern führt.

Vorzugsweise mündet die Durchgangsöffnung an der ersten Gleitfläche des stationären Gleitrings radial außerhalb eines mittleren Durchmessers des Dichtspalts. Dadurch wird eine Länge des Dichtspalts in Radialrichtung oberhalb der Durchgangsöffnung kleiner als in Radialrichtung unterhalb der Durchgangsöffnung. Besonders bevorzugt mündet die Durchgangsöffnung an der ersten Gleitfläche des stationären Gleitrings dabei derart, dass der Dichtspalt im Verhältnis 1/3 oberhalb der Mündung zu 2/3 unterhalb der Mündung unterteilt wird.

Weiter bevorzugt weist die erste Gleitfläche eine umlaufende Umfangsnut auf. Die Umfangsnut ist als Vertiefung in der ersten Gleitfläche des stationären Gleitrings ausgebildet, so dass das über die Durchgangsöffnung durch den stationären Gleitring zugeführte Sperrfluid in Umfangsrichtung der Gleitfläche verteilt wird. Besonders bevorzugt mündet die Durchgangsöffnung im stationären Gleitring dabei in der Umfangsnut.

Weiter bevorzugt weist die zweite Gleitfläche des rotierenden Gleitrings eine Vielzahl von Fördernuten auf. Dadurch wird eine Verteilung des Sperrfluids im Dichtspalt weiter verbessert und eine Leckage zur Atmosphäre reduziert.

Die Fördernuten in der zweiten Gleitfläche des rotierenden Gleitrings liegen vorzugsweise radial innerhalb der Mündung der Durchgangsöffnung am stationären Gleitring.

Gemäß einer weiteren bevorzugten Ausgestaltung der Erfindung umfasst die Gleitringdichtung ferner einen Druckring mit einer Bohrung, wobei der Druckring an der Rückseite des stationären Gleitrings angeordnet ist. Das Sperrfluid kann somit durch die Bohrung im Druckring zur Durchgangsöffnung im stationären Gleitring zugeführt werden. Der Druckring weist vorzugsweise an einem äußeren und einem inneren Umfang jeweils eine Nebendichtung, insbesondere einen O-Ring, auf. Ferner ist der Druckring weiter mittels einer Vorspanneinrichtung in Axialrichtung vorgespannt.

Vorzugsweise wird vom Verdichter maximal eine Menge von 50 bis 100 Normliter pro Minute Prozessgas als Sperrfluid abgezweigt und über die Sperrfluidleitung zur Gleitringdichtung zugeführt. Im Vergleich mit der notwendigen Prozessgasmenge im Stand der Technik kann hierbei eine Reduzierung der abgezweigten Menge des Prozessgases um das 20- bis 100-fache realisiert werden. Hierdurch ergeben sich große Einsparungen an abgezweigtem Sperrfluid, wodurch der Wirkungsgrad des Verdichters der Verdichteranordnung deutlich gesteigert werden kann.

Der Dichtspalt zwischen dem rotierenden und dem stationären Gleitring weist im Betrieb vorzugsweise eine Breite in Axialrichtung auf, welche ≤ 10 µm, insbesondere ≤ 5 µm, ist.

Besonders bevorzugt weist die Verdichteranordnung keine Labyrinthdichtung auf und weist eine Gleitringdichtung als einzige Hauptdichtung auf. D.h., es ist erfindungsgemäß möglich, dass die Verdichteranordnung nur mit einer einzigen Gleitringdichtung als Hauptdichtung abgedichtet werden kann. Selbstverständlich ist es möglich, dass an der einzigen Gleitringdichtung einige Nebendichtungen, insbesondere O-Ringe oder dgl., zur Abdichtung der Bauteile der Gleitringdichtung vorgesehen werden. Allerdings muss keine weitere Hauptdichtung, wie beispielsweise eine Labyrinthdichtung oder eine weitere Gleitringdichtung, die mit der einzigen erfindungsgemäßen Gleitringdichtung in Reihe geschaltet sind, vorgesehen werden. Somit können einerseits Investitionskosten und andererseits Wartungskosten signifikant reduziert werden, da die Verdichteranordnung nur eine einzige Gleitringdichtung aufweist.

Nachfolgend wird unter Bezugnahme auf die begleitende Zeichnung ein bevorzugtes Ausführungsbeispiel der Erfindung im Detail beschrieben. In der Zeichnung ist:
- Fig. 1: eine schematische Schnittansicht einer Verdichteranordnung gemäß dem Stand der Technik, und
- Fig. 2: eine schematische Schnittansicht einer Verdichteranordnung gemäß einem bevorzugten Ausführungsbeispiel der Erfindung.

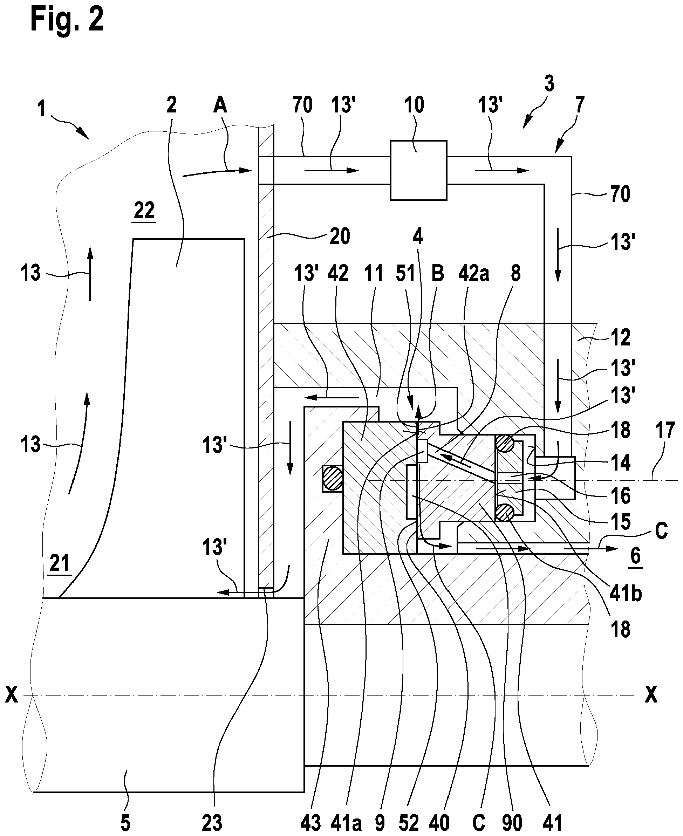

Nachfolgend wird unter Bezugnahme auf Fig. 2 eine Verdichteranordnung 1 gemäß einem bevorzugten Ausführungsbeispiel der Erfindung im Detail beschrieben.

Die Verdichteranordnung 1 umfasst einen Verdichter 2 und eine Dichtungsanordnung mit einer Gleitringdichtungsanordnung 3. Die Gleitringdichtungsanordnung 3 ist eingerichtet, den Verdichter 2 an einer Welle 5 gegenüber einer Atmosphäre 6 abzudichten.

Die Gleitringdichtungsanordnung 3 umfasst eine einzige Gleitringdichtung 4 und eine Sperrfluidversorgung 7. Die Gleitringdichtung 4 umfasst einen stationären Gleitring 41 mit einer ersten Gleitfläche 41a und einen rotierenden Gleitring 42 mit einer zweiten Gleitfläche 42a. Ein Dichtspalt 40 ist zwischen der ersten Gleitfläche 41a und der zweiten Gleitfläche 42a definiert.

Der rotierende Gleitring 42 wird mittels eines Gleitringträgers 43 an der Welle 5 fixiert und rotiert gemeinsam mit der Welle 5.

Der Verdichter 2 verdichtet ein Prozessgas 13 von einem Saugbereich 21 zu einem Druckbereich 22 auf ein vorbestimmtes Druckniveau.

Eine Sperrfluidleitung 70 zweigt dabei Prozessgas, welches in der Gleitringdichtungsanordnung als Sperrfluid 13' verwendet wird, vom Druckbereich 22 ab. Dies ist in Fig. 2 durch den Pfeil A angedeutet. Die Sperrfluidleitung 70 führt zu einer Aufbereitungseinheit 10, welche beispielsweise einen Filter, eine Heizung und/oder eine Kühleinheit und/oder einen Booster zur zusätzlichen Verdichtung des Sperrfluids aufweist. Die Sperrfluidleitung 70 führt dann durch ein Gehäuse 12 zu einer Rückseite 41b des stationären Gleitrings 41.

Die Gleitringdichtung 4 ist eine gasgeschmierte Gleitringdichtung, wobei das Sperrfluid einen Druck von ca. 100 x 10⁵ Pa bis 200 x 10⁵ Pa aufweisen kann.

Wie aus Fig. 2 ersichtlich ist, ist der stationäre Gleitring 41 in einer ringförmigen Aussparung 14 in einem Gehäuse 12 angeordnet, in welche die Sperrfluidleitung 70 mündet. In der Aussparung 14 ist ferner noch ein Druckring 15 mit einer Bohrung 16 angeordnet. Zwei Nebendichtungen 18 sind an einem inneren und einem äußeren Umfang des Druckrings 15 angeordnet.

Wie weiter aus Fig. 2 ersichtlich ist, ist im stationären Gleitring 41 eine Durchgangsöffnung 8 ausgebildet. Die Durchgangsöffnung 8 führt von der Rückseite 41b des stationären Gleitrings 41 zur ersten Gleitfläche 41a. In der ersten Gleitfläche 41a ist dabei eine Umfangsnut 9 ausgebildet. Die Durchgangsöffnung 8 mündet dabei in die Umfangsnut 9.

Im rotierenden Gleitring 42 sind ferner mehrere, insbesondere sichelförmige Fördernuten 90 ausgebildet.

Die Umfangsnut 9 ist dabei radial außerhalb eines mittleren Durchmessers 17 des Dichtspalts 40 angeordnet.

Somit ergibt sich am Dichtspalt 40 ein erster Dichtbereich 51, welcher radial außerhalb der Mündung der Durchgangsöffnung 8 liegt und zum Verdichter 2 hin abdichtet, und ein zweiter Dichtbereich 52, welcher radial innerhalb der Mündung der Durchgangsöffnung 8 liegt und zur Atmosphäre 6 abdichtet. Eine radiale Länge (Höhe) des ersten Dichtbereichs 51 ist dabei kleiner, vorzugsweise die Hälfte, einer radialen Länge (Höhe) des zweiten Dichtbereichs 52. Der erste Dichtbereich 51 ist dabei nutfrei.

Somit strömt das aus dem Prozessgas abgezweigte Sperrfluid 13' durch die Sperrfluidleitung 70 zur Rückseite 41b des stationären Gleitrings in die Aussparung 14 im Gehäuse 12 und von dort durch die Bohrung 16 und die Durchgangsöffnung 8 im stationären Gleitring zur Umfangsnut 9. Ein Teil des Sperrfluids 13' strömt dann über den ersten Dichtbereich 51 in einen Raum 11 zwischen der Gleitringdichtung 4 und dem Verdichter 2 (Pfeil B). Vom Raum 11 ist ein Durchlass 23 in einem Gehäuse 20 des Verdichters vorgesehen, so dass dieser Teil des Sperrfluids 13' zurück zum Saugbereich 21 des Verdichters geführt wird. Ein zweiter, kleinerer Teil des Sperrfluids 13' strömt über den zweiten Dichtbereich 52 in Richtung zur Atmosphäre 6 (Pfeil C) und bildet somit die Leckage zur Atmosphäre 6. Durch das Vorsehen der radialen Fördernuten 90 kann diese Leckage allerdings sehr klein gehalten werden.

Somit kann erfindungsgemäß eine Sperrfluidversorgung 7 sichergestellt werden, welche nur einen Bruchteil des sonst üblichen abgezweigten Prozessfluids als Sperrfluid benötigt. Durch die Zuführung des Sperrfluids 13' durch den stationären Gleitring 41 zum Dichtspalt 40 der Gleitringdichtung 4 kann somit auf die zweite Hauptdichtung im Stand der Technik, welche häufig eine Labyrinthdichtung ist, verzichtet werden. Dadurch wird auch eine Baulänge in Axialrichtung X-X der Gleitringdichtungsanordnung deutlich reduziert. Ferner können Einrichtungen der Aufbereitungseinheit 10, wie beispielsweise ein Filter oder eine Heizung/Kühlung sowie ein Booster deutlich kleiner und kompakter ausgeführt werden und damit neben einer Einsparung von Bauraum auch Investitionskosten gesenkt werden.

Da somit erfindungsgemäß weniger Prozessgas abgezweigt werden muss, um den Betrieb der Gleitringdichtung aufrecht zu erhalten, verbessert sich auch ein Wirkungsgrad des Verdichters 2 deutlich. Dies führt zu einer besonders großen Kosteneinsparung eines Nutzers der Verdichteranordnung. Im Vergleich mit einer Labyrinthdichtung des Standes der Technik, bei der ein Radialspalt ca. 200 µm beträgt, ist eine Dichtspalthöhe am Dichtspalt 40 der Gleitringdichtung 4 im Bereich weniger µm, insbesondere ≤ 10 µm. Hierdurch können die notwendigen Prozessgasmengen um den Faktor 20 bis 100 reduziert werden. Ferner können durch die labyrinthdichtungsfreie Dichtungsanordnung mit nur einer einzigen Gleitringdichtung als Hauptdichtung die Investitionskosten und die Wartungskosten signifikant reduziert werden.

### Bezugszeichenliste

- 1: Verdichteranordnung
- 2: Verdichter
- 3: Gleitringdichtungsanordnung
- 4: Gleitringdichtung
- 5: Welle
- 6: Atmosphäre
- 7: Sperrfluidversorgung
- 8: Durchgangsöffnung
- 9: Umfangsnut
- 10: Aufbereitungseinheit
- 11: Raum an der Gleitringdichtung zum Verdichter
- 12: Gehäuse der Gleitringdichtung
- 13: Prozessgas
- 13': Sperrfluid
- 14: Aussparung im Gehäuse
- 15: Druckring
- 16: Bohrung
- 17: mittlerer Durchmesser des Dichtspalts
- 18: Nebendichtung
- 20: Verdichtergehäuse
- 21: Saugbereich
- 22: Druckbereich
- 23: Durchlass
- 30: Labyrinthdichtung
- 31: Spalt an der Labyrinthdichtung
- 40: Dichtspalt
- 41: stationärer Gleitring
- 41a: erste Gleitfläche
- 41b: Rückseite des stationären Gleitrings
- 42: rotierender Gleitring
- 42a: zweite Gleitfläche
- 43: Gleitringträger
- 51: erster Dichtbereich
- 52: zweiter Dichtbereich
- 70: Sperrfluidleitung
- 90: Fördernut
- A: Abzweigung von Sperrfluid aus dem Prozessgas
- B: Sperrfluid, das über den ersten Dichtbereich in den Raum 11 strömt
- C: Sperrfluid, das über den zweiten Dichtbereich strömt (Leckage zur Atmosphäre)
- X-X: Axialrichtung

## Patentansprüche

1. Verdichteranordnung, umfassend:
- einen Verdichter (2) zum Verdichten eines Prozessgases (13) von einem Saugbereich (21) zu einem Druckbereich (22),
- eine Gleitringdichtungsanordnung (3) zur Abdichtung an einer Welle (5) des Verdichters (2) gegenüber einer Atmosphäre (6),
- wobei die Gleitringdichtungsanordnung eine Gleitringdichtung (4) mit einem eine erste Gleitfläche (41a) aufweisenden stationären Gleitring (41) und einem eine zweite Gleitfläche (42a) aufweisenden rotierenden Gleitring (42) aufweist, welche zwischen den Gleitflächen (41a, 42a) einen Dichtspalt (40) definieren, und
- einer Sperrfluidversorgung (7) mit Sperrfluidleitung (70), welche vom Druckbereich (22) des Verdichters (2) zur Gleitringdichtung (4) führt und durch welche Prozessgas als Sperrfluid vom Druckbereich abgezweigt wird,
**dadurch gekennzeichnet, dass**
- der stationäre Gleitring (41) eine Durchgangsöffnung (8) aufweist, welche von einer Rückseite (41b) des stationären Gleitrings (41) zu einer Mündung an der ersten Gleitfläche (41a) des stationären Gleitrings verlauft, um Prozessgas aus der Sperrfluidleitung (70) durch den stationären Gleitring (41) zum Dichtspalt (40) zuzuführen.

2. Verdichteranordnung nach Anspruch 1, wobei die Mündung der Durchgangsöffnung (8) des stationären Gleitrings den Dichtspalt (40) in einen ersten Dichtbereich (51) radial außerhalb der Mündung der Durchgangsöffnung (8) und einen zweiten Dichtbereich (52) radial innerhalb der Mündung der Durchgangsöffnung (8) unterteilt, wobei wenigstens einer der Dichtbereiche (51, 52) nutfrei ist.

3. Verdichteranordnung nach Anspruch 2, wobei der erste Dichtbereich (51) in Radialrichtung kleiner ist als der zweite Dichtbereich (52).

4. Verdichteranordnung nach einem der vorhergehenden Ansprüche, wobei die Durchgangsöffnung (8) an der ersten Gleitfläche (41a) radial außerhalb eines mittleren Durchmessers (17) des Dichtspalts (40) mündet.

5. Verdichteranordnung nach einem der vorhergehenden Ansprüche, ferner umfassend eine Umfangsnut (9), welche in der ersten Gleitfläche (41a) des stationären Gleitrings ausgebildet ist.

6. Verdichteranordnung nach Anspruch 5, wobei die Durchgangsöffnung (8) in die Umfangsnut (9) mündet.

7. Verdichteranordnung nach einem der vorhergehenden Ansprüche, wobei in der zweiten Gleitfläche (42a) des rotierenden Gleitrings (42) eine Vielzahl von Fördernuten (90) ausgebildet sind.

8. Verdichteranordnung nach Anspruch 7, wobei die Fördernuten (90) radial innerhalb der Mündung der Durchgangsöffnung (8) liegen.

9. Verdichteranordnung nach einem der vorhergehenden Ansprüche, wobei eine vom Verdichter (2) abgezweigte Menge von Prozessgas als Sperrfluid in einem Bereich von 50 bis 100 Normliter pro Minute liegt.

10. Verdichteranordnung nach einem der vorhergehenden Ansprüche, wobei der Dichtspalt (40) im Betrieb der Gleitringdichtung ≤ 10 µm ist.

11. Verdichteranordnung nach einem der vorhergehenden Ansprüche, welche keine Labyrinthdichtung aufweist und welche die Gleitringdichtungsanordnung mit genau einer Gleitringdichtung als einzige Hauptdichtung aufweist.

## Claims

1. A compressor arrangement comprising:
- a compressor (2) for compressing a process gas (13) from a suction region (21) towards a pressure region (22),
- a mechanical seal arrangement (3) for sealing against an atmosphere (6) on a shaft (5) of the compressor (2),
- said mechanical seal arrangement comprising a mechanical seal (4) including a stationary slide ring (41) with a first sliding surface (41a) and a rotating slide ring (42) with a second sliding surface (42a) defining a sealing gap (40) between the sliding surfaces (41a, 42a), and
- a barrier fluid supply (7) with barrier fluid line (70), which extends from the pressure region (22) of the compressor (2) to the mechanical seal (4) and through which process gas is branched off from the pressure region as a barrier fluid,
**characterized in that**
- the stationary slide ring (41) has a through opening (8) extending from a rear side (41b) of the stationary slide ring (41) to an orifice at the first sliding surface (41a) of the stationary slide ring to supply process gas from the barrier fluid line (70) through the stationary slide ring (41) to the sealing gap (40).

2. The compressor arrangement according to claim 1, wherein the orifice of the through opening (8) of the stationary slide ring partitions the sealing gap (40) into a first sealing region (51) radially outside the orifice of the through opening (8) and a second sealing region (52) radially inside the orifice of the through opening (8), at least one of the sealing regions (51, 52) being groove-free.

3. The compressor arrangement according to claim 2, wherein the first sealing region (51), in the radial direction, is smaller than the second sealing region (52).

4. The compressor arrangement according to one of the preceding claims, wherein the through opening (8) at the first sliding surface (41a) opens radially outside an average diameter (17) of the sealing gap (40).

5. The compressor arrangement according to one of the preceding claims, further comprising a circumferential groove (9) formed in the first sliding surface (41a) of the stationary slide ring.

6. The compressor arrangement according to claim 5, wherein the through opening (8) opens into the circumferential groove (9).

7. The compressor arrangement according to one of the preceding claims, wherein a plurality of conveying grooves (90) are formed in the second sliding surface (42a) of the rotating slide ring (42).

8. The compressor arrangement according to claim 7, wherein the conveying grooves (90) are located radially inside the orifice of the through opening (8).

9. The compressor arrangement according to one of the preceding claims, wherein a quantity of process gas branched off from the compressor (2) as a barrier fluid is in a range of 50 to 100 standard liters per minute.

10. The compressor arrangement according to one of the preceding claims, wherein the sealing gap (40) is ≤ 10 µm when operating the mechanical seal.

11. The compressor arrangement according to one of the preceding claims, which does not comprise a labyrinth seal and which comprises the mechanical seal arrangement having exactly one mechanical seal as the single main seal.

## Revendications

1. Ensemble de compresseur comprenant :
- un compresseur (2) pour comprimer un gaz de traitement (13) d'une zone d'aspiration (21) à une zone de pression (22),
- un ensemble de garniture mécanique d'étanchéité (3) pour assurer l'étanchéité sur un arbre (5) du compresseur (2) par rapport à une atmosphère (6),
- dans lequel l'ensemble de garniture mécanique d'étanchéité présente une garniture mécanique d'étanchéité (4) avec un anneau de glissement stationnaire (41) présentant une première surface de glissement (41a) et un anneau de glissement rotatif (42) présentant une deuxième surface de glissement (42a), qui définissent un espace d'étanchéité (40) entre les surfaces de glissement (41a, 42a), et
- une alimentation en fluide de barrage (7) avec une conduite de fluide de barrage (70), qui mène de la zone de pression (22) du compresseur (2) à la garniture mécanique d'étanchéité (4) et par laquelle du gaz de traitement est dévié de la zone de pression en tant que fluide de barrage, **caractérisé en ce que**
- l'anneau de glissement stationnaire (41) présente une ouverture de passage (8) qui s'étend d'une face arrière (41b) de l'anneau de glissement stationnaire (41) vers une embouchure sur la première surface de glissement (41a) de l'anneau de glissement stationnaire pour amener du gaz de traitement de la conduite de fluide de barrage (70) à travers l'anneau de glissement stationnaire (41) vers l'espace d'étanchéité (40).

2. Ensemble de compresseur selon la revendication 1, dans lequel l'embouchure de l'ouverture de passage (8) de l'anneau de glissement stationnaire divise l'espace d'étanchéité (40) en une première zone d'étanchéité (51) radialement à l'extérieur de l'embouchure de l'ouverture de passage (8) et en une seconde zone d'étanchéité (52) radialement à l'intérieur de l'embouchure de l'ouverture de passage (8), dans lequel au moins une des zones d'étanchéité (51, 52) est sans rainure.

3. Ensemble de compresseur selon la revendication 2, dans lequel la première zone d'étanchéité (51) est plus petite dans le sens radial que la seconde zone d'étanchéité (52).

4. Ensemble de compresseur selon l'une quelconque des revendications précédentes, dans lequel l'ouverture de passage (8) débouche sur la première surface de glissement (41a) radialement à l'extérieur d'un diamètre moyen (17) de l'espace d'étanchéité (40).

5. Ensemble de compresseur selon l'une quelconque des revendications précédentes, comprenant en outre une rainure périphérique (9), qui est réalisée dans la première surface de glissement (41a) de l'anneau de glissement stationnaire.

6. Ensemble de compresseur selon la revendication 5, dans lequel l'ouverture de passage (8) débouche dans la rainure périphérique (9).

7. Ensemble de compresseur selon l'une quelconque des revendications précédentes, dans lequel une pluralité de rainures de convoyage (90) sont réalisées dans la deuxième surface de glissement (42a) de l'anneau de glissement rotatif (42).

8. Ensemble de compresseur selon la revendication 7, dans lequel les rainures de convoyage (90) se trouvent radialement à l'intérieur de l'embouchure de l'ouverture de passage (8).

9. Ensemble de compresseur selon l'une quelconque des revendications précédentes, dans lequel une quantité de gaz de traitement dérivée du compresseur (2) en tant que fluide de barrage se situe dans une plage de 50 à 100 litres standard par minute.

10. Ensemble de compresseur selon l'une quelconque des revendications précédentes, dans lequel l'espace d'étanchéité (40) est ≤ 10 µm en fonctionnement de la garniture mécanique d'étanchéité.

11. Ensemble de compresseur selon l'une quelconque des revendications précédentes, lequel ne présente pas de garniture labyrinthe et qui présente l'ensemble de garniture mécanique d'étanchéité avec exactement une garniture mécanique d'étanchéité comme seule garniture d'étanchéité principale.
